# EUROPÄISCHE PATENTANMELDUNG

(11) **EP 1 108 607 A2**
(43) Veröffentlichungstag der Anmeldung: **20.06.2001**
(21) Anmeldenummer: 00119961.1
(22) Anmeldetag: 14.09.2000
(51) Int. Cl.: B60N 2/48

(54) **Anordnung zur stufenweisen Verstellung einer Kopfstütze**

(30) Priorität: 13.12.1999 DE 29921873 U
(71) Anmelder: Kendrion RSL Germany GmbH, 57368 Lennestadt (DE); ADAM OPEL AG, 65428 Rüsselsheim (DE)
(72) Erfinder: Gimbel, Hans-Peter, Dipl.-Ing., 65468 Trebur (DE); Fürll, Joachim, Dipl.-Ing., 65428 Rüsselsheim (DE)
(74) Vertreter: Köchling, Conrad-Joachim

(57) **Zusammenfassung**

Um eine Anordnung zur Verstellung einer Kopfstütze für Kraftfahrzeuge mit einer an der Sitzlehne befestigten Raststange (1) und einer darauf verschieblichen Kopfstütze, an der ein von der Raststange (1) durchgriffener Stangenträger (16) mit Rastnase (4) und Ausnehmung mit Gleitschuh (5) gehaltert ist, zu schaffen, bei der eine stufenweise Höhenverstellung und eine stufenlose Neigungsverstellung der Kopfstütze ermöglicht ist, wird vorgeschlagen, daß am Stangenträger (16) ein Schwenkgelenkteil (3) mit Bremsstutzen (20) vorgesehen ist, der von einem federnden Materialstreifen (14) umgriffen ist, der an der Kopfstütze unverdrehbar gehalten ist, und daß die Haltekraft zwischen Materialstreifen (14) und Bremsstutzen (20) und die den Stangenträger (16) in Verriegelungslage haltenden zweiten Haltekraft aufeinander abgestimmt ist, so daß bei Verschwenkung der Kopfstütze die erste Haltekraft und dann, die zweite Haltekraft überwindbar und der Stangenträger (16) mit Rastnase (4) von der Raststange (1) entriegelbar ist.

## Beschreibung

Die Erfindung betrifft eine Anordnung zur stufenweisen Verstellung einer Kopfstütze an einer Sitzlehne eines Sitzes für Kraftfahrzeuge, bestehend aus mindestens einer an der Sitzlehne befestigten Raststange und einer auf der Raststange verschieblich angeordneten Kopfstütze, wobei an der Kopfstütze ein von der Raststange längs durchgriffener Stangenträger mit Rastnase gehaltert ist und in einer Ausnehmung des Stangenträgers, auf der Seite, die der Rastnase abgewandt ist, ein Gleitschuh gehaltert ist, wobei der Stangenträger mit der Rastnase mittels auf den Gleitschuh einwirkender Federkraft gegen die Raststange angedrückt ist und der Stangenträger mit Rastnase entgegen der Federkraft relativ zur Raststange verschwenkbar ist, so daß die Rastnase außer Eingriff von der Rastung der Raststange ist.

Eine derartige Anordnung ist aus der DE 198 19 503 C1 bekannt. Auf diese Druckschrift wird bezüglich ihres Inhaltes voll umfänglich Bezug genommen.

Mit der im Stand der Technik bekannten Anordnung ist es bei einfachem konstruktivem Aufbau aus wenigen einfachen Bestandteilen bestehenden Einzelteilen möglich, eine Anordnung zu schaffen, die äußerst funktionstüchtig und langlebig ist.

Die Anordnung beinhaltet als wesentliche Elemente den Stangenträger mit Rastnase sowie den Gleitschuh und mindestens ein Federmittel. Diese Baueinheit ist in einen Einschubkanal für die Raststange in der Kopfstütze vorzugsweise an der Mündung des Kanales eingesetzt und mit der Kopfstütze fest verbunden. In diese Einheit kann die Raststange eingeschoben werden. Dabei wird der Gleitschuh und der Stangenträger mittels der Federkraft gegen die Raststange auf Anlage gehalten, wobei die Rastnase des Stangenträgers je nach Position in eine der Rasten der Kopfstütze einfällt.
Die Verschiebemöglichkeit der Kopfstütze ist damit blockiert. Sofern die Kopfstütze verschoben werden soll, so kann die Kopfstütze und damit der Stangenträger mit der Rastnase entgegen der Federkraft relativ zur Raststange so verschwenkt werden, daß die Rastnase außer Eingriff von der Raste der Raststange ist. Die Kopfstütze kann daraufhin längs der Raststange verschoben werden. Wird die Kopfstütze losgelassen, so wird aufgrund der Federkraft wieder eine Ausrichtung des Stangenträgers mit der Rastnase relativ zu den Rasten der Raststange erreicht, so daß die Rastnase in eine Rastung der Raststange einfahren kann. Es ist somit eine Arretierung der Kopfstütze in unterschiedlichen Positionen möglich.

Im Stand der Technik sind ferner Kopfstützen zum Einbau in Kraftfahrzeuge bekannt, die ebenfalls eine Aufnahme für stangenförmige Halterungen aufweisen. Diese Halterungen weisen an der Unterseite der Kopfstütze ausmündende Einschubkanäle für die stangenförmigen Halterungen auf. Die Stange durchgreift dabei ein in der Kopfstütze reibschlüssig gehaltertes Schwenkgelenkteil, um welches die Kopfstütze begrenzt schwenkbar ist, um sie für den Benutzer angemessen einstellen zu können. Dabei ist am Schwenkgelenkteil ein koaxial zu dessen Schwenkachse gerichteter Bremsstutzen angeordnet, der bremsbackenartig von einem federnden Materialstreifen, zum Beispiel aus Kunststoff oder aus Federstahl, mindestens zum größten Teil seines Umfanges umgriffen ist, wobei der federnde Materialstreifen an der Kopfstütze (in deren Innerem) unverdrehbar gehaltert ist. Eine solche aus der DE 91 07 485 U1 bekannte Ausbildung hat den Vorteil, daß der Reibschluß und damit die Bremskraft einstellbar ist, indem eine entsprechende Materialbemessung des federnden Materialstreifens bzw. eine entsprechend enge Toleranz zwischen Materialstreifen und Bremsstutzen eingestellt wird, so daß die Bremskraft weitgehend unabhängig vom Material der Kopfstütze ist, da der federnde Materialstreifen nicht Bestandteil der Kopfstütze oder des Kopfstützenrahmens ist, sondern an der Kopfstütze oder der Kopfstützenrahmen unverdrehbar gehaltert ist. Dabei kann im Stand der Technik und so auch bei vorliegender Erfindung vorgesehen sein, daß der Bremsstutzen reibungserhöhende Oberflächenausbildung aufweist oder zwischen der Bremsstutzenumfangsfläche und dem federnden Materialstreifen ein Bandstreifen aus reibungserhöhendem Material angeordnet ist. Die Ausbildungen, die im Stand der Technik beschrieben sind, sind sämtlich auch bei der Erfindung anwendbar.

Ausgehend von dem bezeichneten Stand der Technik liegt der Erfindung die Aufgabe zugrunde, eine Anordnung gattungsgemäßer Art zu schaffen, bei der bei weiterhin einfachem Aufbau aus wenigen Bestandteilen nicht nur eine äußerst funktionstüchtige und langlebige Anordnung zu schaffen ist, sondern darüber hinaus sowohl eine stufenweise Höhenverstellung als auch eine stufenlose Neigungsverstellung der Kopfstütze ermöglicht ist.

Zur Lösung dieser Aufgabe wird vorgeschlagen, daß am Stangenträger ein Schwenkgelenkteil mit einem koaxial zur Schwenkachse gerichteten Bremsstutzen vorgesehen ist, der bremsbackenartig von einem federnden Materialstreifen mindestens über den größten Teil seines Umfangs umgriffen ist, wobei der federnde Materialstreifen an der Kopfstütze unverdrehbar gehalten ist, und daß die erste Haltekraft zwischen dem federnden Materialstreifen und dem Bremsstutzen einerseits und der den Stangenträger mittels Federkraft in Verriegelungslage haltenden zweiten Haltekraft andererseits derart aufeinander abgestimmt ist, daß bei Verschwenkung der Kopfstütze zunächst die erste Haltekraft überwindbar und die Kopfstütze um das Schwenkgelenkteil schwenkbar ist und erst dann, insbesondere wenn die Kopfstütze maximal verschwenkt ist, die zweite Haltekraft überwindbar und der Stangenträger mit Rastnase von der Raststange entriegelbar ist.

Durch diese Ausbildung ist nicht nur erreicht, daß sowohl eine stufenweise Höhenverstellung als auch eine stufenlose Neigungsverstellung der Kopfstütze möglich ist, sondern es ist auch sichergestellt, daß nicht zufällig bei der Neigungsverstellung gleichzeitig eine Höhenverstellung erfolgt, weil die Haltekräfte zwischen der Neigungsverstelleinrichtung und der Höheneinstelleinrichtung so aufeinander abgestimmt sind, daß bei der Neigungsverstellung die Entriegelung des Stangenträgers und damit die Höhenverstellung noch nicht möglich ist, sondern erst dann, wenn mit erhöhtem Kraftaufwand die Neigungsverstellung erfolgt, insbesondere dann, wenn die Kopfstütze in einer maximal geneigten Endstellung ausgerichtet ist, so daß anschließend erst die zweite Haltekraft überwunden wird, mittels derer die Entriegelung des Stangenträgers mit der Rastnase von der Raststange erfolgt. Es ist somit eine Komfortverstellung über den Bremsstutzen möglich, wobei erst nach Überwindung der Verstellkraft für die Komfortverstellung eine Entriegelung zur Höhenverstellung der Kopfstütze erfolgen kann.

An sich bekannte vorteilhafte Weiterbildungen sind in den Ansprüchen 2 bis 6 bezeichnet.

Eine besonders bevorzugte Weiterbildung wird darin gesehen, daß der Gleitschuh relativ zum Stangenträger parallel zur Längsachse der Raststange gegen die Kraft eines zweiten Federmittels begrenzt verstellbar ist, wobei der Gleitschuh bei in Raststellung befindlichen Teilen mit seinem Ende hinter einen Vorsprung des Stangenträgers greift und bei Verschwenkung des Stangenträgers in die Freigabelage der Gleitschuh entgegen der Federkraft des zweiten Federmittels so weit verschieblich ist, bis der Vorsprung das Ende des Gleitschuhs freigibt und der Stangenträger nachfolgend gegen die Federkraft des ersten Federmittels in die Freigabelage verschwenkbar ist.

Dabei ist bevorzugt vorgesehen, daß das Ende des Gleitschuhs im mit der Randkante der Ausnehmung des Stangenträgers zusammenwirkenden Bereich abgeschrägt ist.

Durch diese konstruktive Ausbildung ist die gewünschte unabhängige Verstellmöglichkeit für die Schwenkbewegung und die Höhenverstellung in einfacher Weise realisiert.

Ein Ausführungsbeispiel der Erfindung ist in der Zeichnung schematisch dargestellt und im folgenden näher beschrieben.

Es zeigt:
- Figur 1: wesentliche Teile der Anordnung in Ansicht;
- Figur 2: desgleichen teilweise aufgebrochen;
- Figur 3: eine Einzelheit im Teilschnitt gesehen in der Rastposition;
- Figur 4: desgleichen in der Verstellposition gesehen.

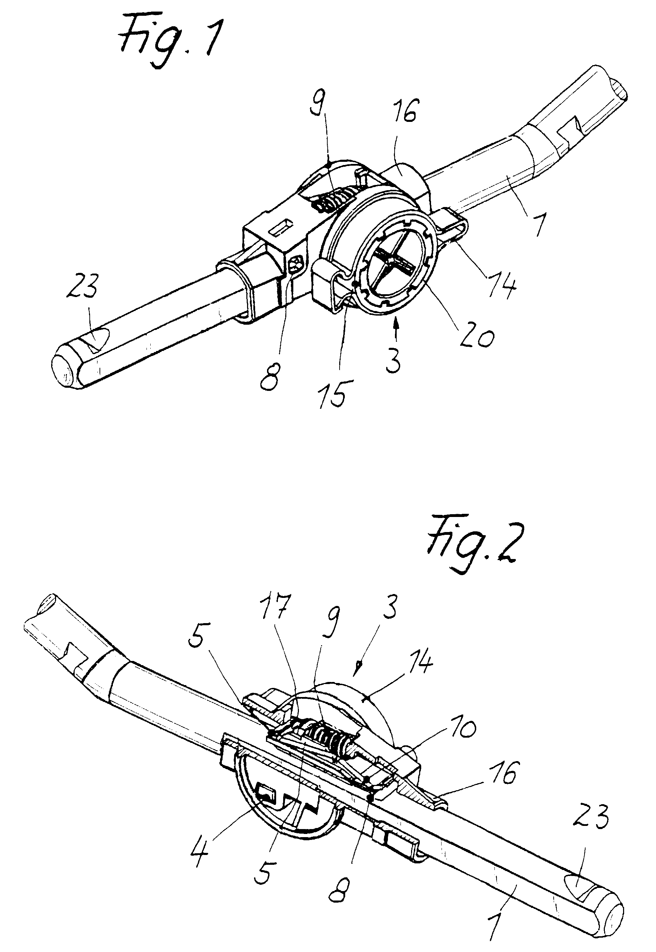

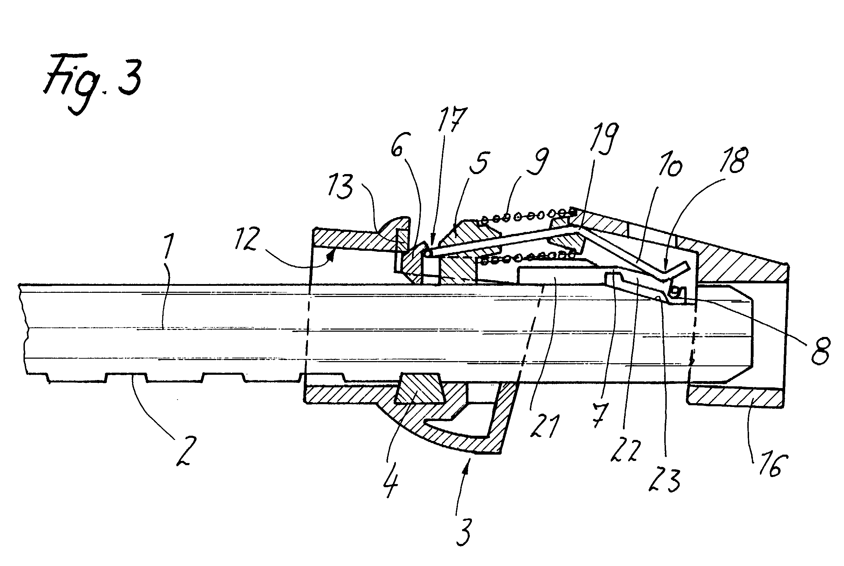

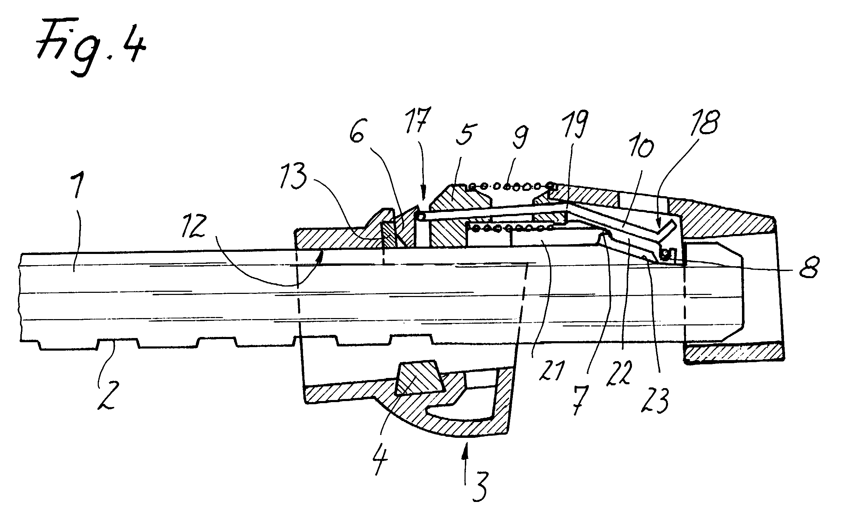

Die Gesamtanordnung ist in den Figuren 1 und 2 verdeutlicht.
Es sind dort die wesentlichen Teile der Verstelleinrichtung zum Verstellen einer Kopfstütze gezeigt.
Hierzu ist an einer Sitzlehne oder dergleichen eine Raststange 1 befestigt, auf der eine in der Zeichnung nicht dargestellte Kopfstütze verschieblich und schwenkbeweglich angeordnet ist. Dazu ist an der Kopfstütze ein von der Raststange 1 längs durchgriffener Stangenträger 16 mit Rastnase 4 gehalten, wobei in einer Ausnehmung des Stangenträgers 16 auf der Seite, die der Rastnase 4 abgewandt ist, ein Gleitschuh 5 gehaltert ist. Der Stangenträger 16 mit der Rastnase 4 ist mittels mindestens eines auf den Gleitschuh 5 einwirkenden Federmittels 10 gegen die Raststange 1 angedrückt, wie aus Figur 3 ersichtlich. Der Stangenträger 16 ist samt Rastnase 4 gegen die Federkraft relativ zur Raststange 1 in eine Entriegelungsposition verschwenkbar, die in Figur 4 gezeigt ist, bei der die Rastnase 4 außer Eingriff von der Rastung 2 der Raststange 1 ist. Das erste Federmittel 10 ist durch einen U-förmigen Federdrahtbügel gebildet, der mit seiner Basis bei 17 und mit seinen Schenkelenden bei 18 auf den Gleitschuh 5 federnd einwirkt, wobei der Federbügel mit einer Abwinklung 19 sich innerhalb einer Höhlung am Stangenträger 16 als Gegenlager abstützt. Desweiteren ist am Stangenträger 16 ein Schwenkgelenkteil zur Bildung eines Drehgelenkes 3 mit einem koaxial zur Schwenkachse gerichteten Bremsstutzen 20, vorgesehen, der von einem federnden Materialstreifen 14 nach Art einer Bremsbacke umgriffen ist, der über den größten Teil seines Umfangs angreift. Zwischen dem federnden Materialstreifen 14 und der Umfangsfläche des Bremsstutzens 20 kann ein Reibbelag 15 vorgesehen sein. In der Einbausollposition ist der federnde Materialstreifen 14 in einem entsprechende Hohlraum der Kopfstütze unverdrehbar gehalten. Das Drehgelenk 3 ist zum Verschwenken der Kopfstütze betätigbar, wobei der federnde Materialstreifen 14 quasi als Bremsfeder auf dem Reibbelag 15 des Stutzens 20 drehbar ist.

Die Haltekraft zwischen dem federnden Materialstreifen 14 und dem Bremsstutzen 20 einerseits und der den Stangenträger 16 in der Verriegelungslage gemäß Figur 3 haltenden zweiten Haltekraft andererseits ist derart aufeinander abgestimmt, daß bei Verschwenkung der Kopfstütze zunächst die erste Haltekraft des Drehgelenkes 3 überwunden werden muß und erst dann, insbesondere wenn die Kopfstütze maximal bis zu einem Anschlag verschwenkt ist, die zweite Haltekraft überwindbar ist und der Stangenträger 16 mit Rastnase 4 von der Raststange 1 entriegelbar ist, also in die Position gemäß Figur 4 überführbar ist. Vorzugsweise ist der Stangenträger 16 mit Rastnase 4 so angeordnet, daß er zur Entriegelung in Fahrtrichtung des mit der Anordnung bestückten Fahrzeuges entgegen Federkraft verschwenkbar ist. Der Stangenträger 16 ist mit dem Gleitschuh 5 über das Federmittel 10 nach Art einer Spannfeder verbunden, mittels derer der Stangenträger 16 mit der Rastnase 4 gegen die Raststange 1 mit den Rastungen 2 angezogen ist und der Gleitschuh 5 an die den Rasten 2 der Raststange 1 gegenüberliegende Seite der Raststange 1 angezogen ist. Dabei hat der Stangenträger 16 ausreichendes Bewegungsspiel quer zur Raststange 1 (zu deren Längserstreckung), um durch Querverschiebung oder Verkantung bzw. Drehung um den Drehpunkt 11 entgegen der Kraft der Spannfeder 10 die Rastnase 4 aus der Rastung der Raststange 1 zu lösen.

Der Gleitschuh 5 weist ein von dem Federmittel 10 beaufschlagtes erstes Teil 21 und in Längsrichtung parallel zur Raststange 1 dem ersten Teil 21 folgend ein zweites Teil 22 auf, welches mit dem ersten Teil 21 über ein Filmscharnier 7 verbunden ist. Das Federmittel 10 hält beide Teile 21 und 22 an die Raststange 1 auf der den Rastkerben 2 abgewandten Seite angedrückt. Die Raststange 1 weist an ihrem freien Ende eine Fangkerbe 23 auf, in die der zweite Teil 22 in der Endposition rastend eingriff, wenn die Kopfstütze mit dem Stangenträger 16 sich in der maximalen Auszugsstellung befindet, wie anhand der Stellung gemäß Figur 1 verdeutlicht ist. Dabei liegt im Ende des Teiles 22 ein Verriegelungsstift 8 ein, der in fensterartige Ausnehmungen des Stangenträgers 16 eingreift, und zwar mit ausreichendem Bewegungsspiel in jeglicher Richtung.

Wie insbesondere aus Figur 3 und 4 ersichtlich, ist der Gleitschuh 5 relativ zum Stangenträger 16 parallel zur Längsachse der Raststange 1 gegen die Kraft eines zweiten Federmittels 9 in Form einer Schraubendruckfeder begrenzt verstellbar. Die Schraubendruckfeder 9 stützt sich einerseits an dem Stangenträger 16 und andererseits an dem Gleitschuh 5 an entsprechenden Halte- und Führungsflächen ab. Wie insbesondere in Figur 3 gezeigt, greift der Gleitschuh 5 mit seinem in der Zeichnung links befindlichen Ende hinter einen Vorsprung des Stangenträgers 16 (in der Raststellung). Bei Verschwenkung des Stangenträgers 16 in die Freigabelage analog Figur 4 wird der Gleitschuh 5 entgegen der Kraft der Feder 9 und auch entgegen der Kraft der Feder 10 so weit aus der Position gemäß Figur 3 in die Position gemäß Figur 4 nach rechts verschoben, bis der Vorsprung des Stangenträgers 16 das Ende des Gleitschuhs 5 freigibt. In dieser Position ist der Stangenträger 16 gegen die Federkraft des Federmittels 10 in die Freigabelage gemäß Figur 4 verschwenkbar, wobei sich der Gleitschuh 5 mit seinem Ende an einer Gegenfläche 13 des Stangenträgers 16 oberhalb der Ausnehmung abstützt, in die das Ende des Gleitschuhs 5 in der Position gemäß Figur 3 hineinragt. Die Schwenkbewegung ist begrenzt, sobald die Raststange 1 an die Anschlagfläche 12 zur Anlage kommt. In dieser Position ist eine Längsverschiebung des Stangenträgers 16 relativ zur Raststange 1 möglich.

Das Ende des Gleitschuhs 5 ist im Bereich, der mit der Randkante der Ausnehmung des Stangenträgers 16 zusammenwirkt, abgeschrägt (Schräge 6). Die erfindungsgemäße Ausbildung ermöglicht eine Längsverschiebung und zudem eine Verschwenkung der entsprechend ausgestatteten Kopfstütze relativ zur Raststange 1. Dabei muß zur Längsverstellung entlang der Raststange 1 zunächst die Schwenkbewegung der Kopfstütze bis zu einem entsprechenden Anschlag für das Drehgelenk 3 erfolgen und erst nachfolgend ist die Entriegelung des Stangenträgers 16 von der
Raststange 1 möglich. Bei der Entriegelungsfunktion wird die Raststange 1 in Richtung "Z" gemäß Figur 3 und 4 über den Drehpunkt 11 mit Druck beaufschlagt. Hierdurch wird der Gleitschuh 5 über den Gegendruck der Federn 9 und 10 über die Schräge 6 hin in Längsrichtung verschoben. Anschließend kann die Raststange 1 bis zur Anschlagkante (Anschlagfläche 12) geschwenkt werden. Die Rastkerbe 2 ist dann aus der Raststellung entfernt und der Stangenträger 16 kann in Längsrichtung der Raststange 1 verschoben werden. Gemäß der erfindungsgemäßen Ausbildung wird eine hohe Anfangskraft und eine geringe Haltekraft realisiert. Durch den Druck der Raststange 1 wird der Gleitschuh 5 über die Schräge 6 in Längsrichtung verschoben. Sobald der Gleitschuh 5 mit der Schräge hinter die Kante 13 abfällt, wird die Kraft (Festhaltestellung) geringer und die Raststange kann erleichtert bis zur Anlagefläche 12 geschwenkt werden.

Die Erfindung ist nicht auf das Ausführungsbeispiel beschränkt, sondern im Rahmen der Offenbarung vielfach variabel. Alle neuen, in der Beschreibung und/oder Zeichnung offenbarten Einzel- und Kombinationsmerkmale werden als erfindungswesentlich angesehen.

## Patentansprüche

1. Anordnung zur stufenweisen Verstellung einer Kopfstütze an einer Sitzlehne eines Sitzes für Kraftfahrzeuge, bestehend aus mindestens einer an der Sitzlehne befestigten Raststange (1) und einer auf der Raststange (1) verschieblich angeordneten Kopfstütze, wobei an der Kopfstütze ein von der Raststange (1) längs durchgriffener Stangenträger (16) mit Rastnase (4) gehaltert ist und in einer Ausnehmung des Stangenträgers, auf der Seite, die der Rastnase (4) abgewandt ist, ein Gleitschuh (5) gehaltert ist, wobei der Stangenträger (16) mit der Rastnase (4) mittels auf den Gleitschuh (5) einwirkender Federkraft gegen die Raststange (1) angedrückt ist und der Stangenträger (16) mit Rastnase (4) entgegen der Federkraft relativ zur Raststange (1) verschwenkbar ist, so daß die Rastnase (4) außer Eingriff von der Rastung (2) der Raststange (1) ist,
**dadurch gekennzeichnet,** daß am Stangenträger (16) ein Schwenkgelenkteil (3) mit einem koaxial zur Schwenkachse gerichteten Bremsstutzen (20) vorgesehen ist, der bremsbackenartig von einem federnden Materialstreifen (14) mindestens über den größten Teil seines Umfangs umgriffen ist, wobei der federnde Materialstreifen (14) an der Kopfstütze unverdrehbar gehalten ist, und daß die erste Haltekraft zwischen dem federnden Materialstreifen (14) und dem Bremsstutzen (20) einerseits und der den Stangenträger (16) mittels Federkraft in Verriegelungslage haltenden zweiten Haltekraft andererseits derart aufeinander abgestimmt ist, daß bei Verschwenkung der Kopfstütze zunächst die erste Haltekraft überwindbar und die Kopfstütze um das Schwenkgelenkteil (3) schwenkbar ist und erst dann, insbesondere wenn die Kopfstütze maximal verschwenkt ist, die zweite Haltekraft überwindbar und der Stangenträger (16) mit Rastnase (4) von der Raststange (1) entriegelbar ist.

2. Anordnung nach Anspruch 1,
**dadurch gekennzeichnet,** daß der Stangenträger (16) mit Rastnase (4) in Fahrtrichtung des mit der Anordnung bestückten Fahrzeuges entgegen Federkraft verschwenkbar ist.

3. Anordnung nach Anspruch 1 oder 2,
dadurch gekennzeichnet, daß der Stangenträger (16) mit dem Gleitschuh (5) über eine Spannfeder (10) verbunden ist, mittels derer der Stangenträger (16) mit der Rastnase (4) gegen die Raststange (1) mit Rasten (2) angezogen ist und der Gleitschuh (5) an die den Rasten (2) der Raststange (1) gegenüberliegende Seite der Raststange (1) angezogen ist, wobei der Stangenträger (16) ausreichendes Bewegungsspiel quer zur Raststange (1) (zu deren Längserstreckung) aufweist, um durch Querverschiebung oder Verkantung entgegen der Kraft der Spannfeder (10) die Rastnase (4) aus der Rastung (2) der Raststange (1) zu lösen.

4. Anordnung nach einem der Ansprüche 1 bis 4, **dadurch gekennzeichnet,** daß die Spannfeder (10) ein U-förmiger Federbügel ist, dessen Schenkelenden am Stangenträger (16) gehaltert sind, dessen Schenkel etwa parallel zur Längserstreckung des Stangenträgers (16) und der diesen durchgreifenden Raststange (1) gerichtet sind und dessen Basis (17) die Ausnehmung des Stangenträgers (16) samt dem darin befindlichen Gleitschuh (5) übergreift.

5. Anordnung nach einem der Ansprüche 1 bis 4, **dadurch gekennzeichnet,** daß der Gleitschuh (5) ein von dem Federbügel (10) beaufschlagtes erstes Teil (21) und in Längsrichtung parallel zur Raststange (1) dem ersten Teil (21) folgend ein zweites Teil (22) aufweist, welches mit dem ersten Teil (21) scharnierartig verbunden ist, wobei das Federmittel (10) das zweite Teil (22) an die Raststange (1) auf der den Rastkerben (2) abgewandten Seite angedrückt hält, wobei die Raststange (1) am freien Ende eine Fangkerbe (23) aufweist, in die der zweite Teil (22) rastend eingreift, wenn die Kopfstütze mit dem Stangenträger (16) sich in der maximalen Auszugsstellung befindet.

6. Anordnung nach einem der Ansprüche 1 bis 5, **dadurch gekennzeichnet,** daß die Rastnase (4) des Stangenträgers (16) durch einen Stababschnitt gebildet ist, der in zwei parallelen Wandungsteilen des Stangenträgers (16) mit seinen Enden gehaltert ist.

7. Anordnung nach einem der Ansprüche 1 bis 6, **dadurch gekennzeichnet,** daß der Gleitschuh (5) relativ zum Stangenträger (16) parallel zur Längsachse der Raststange (1) gegen die Kraft eines zweiten Federmittels (9) begrenzt verstellbar ist, wobei der Gleitschuh (5) bei in Raststellung befindlichen Teilen mit seinem Ende hinter einen Vorsprung des Stangenträgers (16) greift und bei Verschwenkung des Stangenträgers (16) in die Freigabelage der Gleitschuh (5) entgegen der Federkraft des zweiten Federmittels (9) so weit verschieblich ist, bis der Vorsprung das Ende des Gleitschuhs (5) freigibt und der Stangenträger (16) nachfolgend gegen die Federkraft des ersten Federmittels (10) in die Freigabelage verschwenkbar ist.

8. Anordnung nach Anspruch 7, **dadurch gekennzeichnet,** daß das Ende des Gleitschuhs (5) im mit der Randkante der Ausnehmung des Stangenträgers (16) zusammenwirkenden Bereich abgeschrägt ist.
